# EUROPEAN PATENT SPECIFICATION

(11) **EP 0 430 611 B1**
(45) Date of publication and mention of the grant of the patent: **12.06.1996**
(21) Application number: 90312814.8
(22) Date of filing: 26.11.1990
(51) Int. Cl.: C08F 292/00, C08F 2/44, C08F 291/00

(54) **Pigmented particles**
Pigmentierte Teilchen
Particules pigmentées

(30) Priority: 28.11.1989 JP 308229/89
(43) Date of publication of application: 05.06.1991
(73) Proprietor: NIPPON PAINT CO., LTD., Osaka-shi Osaka 530 (JP)
(72) Inventor: Mizuguchi, Katsumi, Ibaraki-shi, Osaka (JP); Ohiwa, Masanori, Toyonaka-shi, Osaka (JP); Ishii, Keizou, Ashiya-shi, Hyogo (JP); Ishikura, Shinichi, Tszuki-gun, Kyoto (JP)
(74) Representative: Perry, Robert Edward

(56) References cited:
- GB-A- 1 172 513
- LU-A- 52 329
- US-A- 4 846 893
- CHEMICAL ABSTRACTS, vol. 85, 1976, page 107, abstract no. 79790u, Columbus, Ohio, US; & JP-A-76 10 887

## Description

### Field of the Invention

The present invention relates to pigmented composite particles of the type suitable for use as colouring agents, matting agents, ultraviolet absorber and water-resistant pigmented polymers.

### Background of the Invention

JP-A-85188419 discloses epoxy particles prepared from an epoxy resin emulsion containing organic or inorganic particles and an amine curing agent. The particles have poor water-resistance, because they contain a large proportion of amino groups. Moreover, the epoxy resin is associated with yellowing problems. Further, if the epoxy resin is alicyclic, it has poor reactivity and does not impart sufficient cross-linking, resulting in poor hardness, thermal stability and fracture resistance.

JP-A-87131050 discloses coloured resin particles prepared by mixing polyvinyl chloride particles with a colouring paste in the presence of a plasticiser and then adding an acrylic resin emulsion, followed by heating. The resin particles have the acrylic emulsion layer on the surface, but this has poor water-resistance and weather-resistance.

GB-A-1172513 discloses encapsulation of pigment particles with an addition polymer, in the presence of an initiator together with copolymerisable monomer. A stabiliser may also be used.

US-A-4846893 discloses the production of a surface-treated pigment, involving the dispersion of pigment particles in an aqueous solution of water-soluble high molecular weight polymer such as polyacrylic acid, in the presence of an initiator, followed by the addition of the vinyl monomer. Polyvinyl pyrrolidone and polyvinyl alcohol act as a dispersion stabiliser.

Chem.Abs. 85:79790u(1976), discloses dispersions of resin granules mixed with TiO₂ and polymerisable unsaturated monomers such as styrene together with a peroxide. Ethyl acetate is used as a solvent.

### Summary of the Invention

According to the present invention, pigmented particles having an average particle size of 3 to 300 µm, are obtainable by suspension-polymerising an aqueous suspension comprise:
(a) a pigment paste comprising a pigment, a resin having at least 0.2 mmol/g of a hydrophilic group, and optionally, a solvent, the amounts of the pigment and the solvent respectively being 0.01 to 2.33 and 0 to 3.8 parts by weight per part by weight of the resin;
(b) a polymerisable monomer, wherein the ratio of the pigment paste to the polymerisable monomer is within the range of 2/98 to 50/50; and
(c) a polymerisation initiator in an amount of 0.1 to 5% by weight based on the total monomer amount; wherein the suspension comprises 1.5 to 19 parts by weight of the aqueous medium per part by weight of the total amount of the components (a), (b) and (c).

### Detailed Description of the Invention

The resin used in the present invention is a "pigment grinding resin" that is suitably compatible with the pigment. It is preferably pulverulent, e.g. having an average particle size up to or of the order given in any of the Examples. It has a hydrophilic group content of at least 0.2 mmol/g, preferably 0.5 to 6.0 mmol/g. The hydrophilic group content is sufficient to provide the functions of allowing dispersion in an aqueous medium and of attracting and carrying pigment particles. Examples of suitable hydrophilic groups are anionic groups such as carboxyl, sulfonic and phosphonic groups, cationic groups such as amino and ammonium groups, amphoteric groups such as in betaines, and non-ionic groups such as amide, hydroxyl and polyethylene oxide groups.

The resin preferably has a hydrophobic portion, for compatibility with, and effective bonding to, the polymerisable monomer (b). Many suitable resins inherently have a vinyl backbone or other hydrophobic portion, e.g. an alkyl group of more than 3 carbon atoms. If the resin does not contain a hydrophobic portion, it can be introduced, in a manner known per se.

The resin used in the present invention preferably has a glass transition temperature of -20 to 100°C, a solubility parameter of 9 to 12, and a number average molecular weight (Mn) of 2,000 to 100,000. For such a resin, the dispersibility of the pigment is good.

The resin can be prepared by methods known per se. Its backbone is, for example, that of a vinyl polymer, polyester, polyamide or polyether. A vinyl polymer, as prepared by polymerising hydrophilic group-containing monomers and other copolymerisable monomers in the presence of a polymerisation initiator, is preferred. The monomers and initiator can be selected from the polymerisable monomers (b) (except polyethylenic monomers) and polymerisation initiators (c), as described in more detail below. The amount of the polymerization initiator is within the range of 0.3 to 5 % by weight based on the total weight of the monomers. The polymerization is conducted at a temperature of 100 to 130 °C for 2 to 10 hours. The polymerization may be conducted in a solvent if necessary. Examples of the solvents are water-soluble solvents or water-insoluble solvents, such as xylene, dioxane, butyl acetate or n-butanol. The obtained vinyl polymer may be neutralized with an acid compound or basic compound, if necessary. If the hydrophilic group is acidic, the neutralizing agent is a basic compound, such as triethylamine or dimethylethanolalmine. If the hydrophilic group is basic, the neutralizing agent is an acid compound, such as acetic acid, propionic acid, hydrochloric acid, sulfonic acid or sulfuric acid. The neutralization may be conducted during the suspension polymerization of the pigmented particle of the present invention.

The pigment paste (a) of the present invention is generally prepared by mixing the above mentioned pigment grinding resin, a pigment and if necessary a solvent in the presence of glass beads or steel beads. Examples of the pigments are those used for paint, for example an inorganic pigment, such as zinc white, titanium oxide, antimony white, carbon black, iron black, iron red, minium, cadmium yellow, zinc sulfate, calcium sulfate, lead sulfate, barium carbonate, white lead and alumina white; or an organic pigment, such as an azo compound, a phthalocyanine, a thioindigo, an anthraquinone, a flavanthrone, an indanthrene, an anthrapyridine, a pyranethrone, an isoindolinone, a perylene, a perinone and a quinacridone. Examples of the solvents are butyl acetate, xylene, toluene, butanol, methyl ethyl ketone and isobutyl ketone.

In the pigment paste (a), the pigment is present in an amount of 0.01 to 2.33 parts by weight, preferably 0.03 to 1 part by weight based on one part by weight of the resin grinding resin. The solvent is 0 to 3.8 parts by weight, preferably 0.01 to 2.33 parts by weight based on one part by weight of the pigment grinding resin. Amounts outside the above range reduce the pigment dispersibility or pigment stability of the pigment paste (a).

The polymerizable monomer (b) employed in the present invention includes a carboxylic group containing polymerizable monomer, such as acrylic acid, methacrylic acid, crotonic acid, itaconic acid, maleic acid and fumaric acid; an alkyl ester of the carboxylic group containing monomer, such as methyl acrylate, methyl methacrylate, ethyl acrylate, ethyl methacrylate, n-butyl acrylate, n-butyl methacrylate and ethylhexyl acrylate; a hydroxyl group-containing monomer, such as 2-hydroxyethyl acrylate, hydroxypropyl acrylate, 2-hydroxyethyl methacrylate, hydroxypropyl methacrylate, hydroxybutyl acrylate, hydroxybutyl methacrylate, allyl alcohol and methallyl alcohol; a polymerizable amide, such as acrylamide and methacrylamide; a polymerizable nitrile, such as acrylonitrile and methacrylonitrile; glycidyl (meth)acrylate; an aromatic vinyl compound, such as styrene, vinyl toluene and t-butylstyrene; an alpha-olefin, such as ethylene and propylene; a vinyl compound, such as vinyl acetate and vinyl propionate; and a diene compound, such as butadiene and isoprene.

In addition to the above mentioned polymerizable monomer, a polyethylenic monomer may be employed to enhance organic solvent resistance. The polyethylenic monomers are monomers having at least two α,β -unsaturations, such as unsaturated carboxylic ester of polyhydric alcohols, unsaturated alcohol esters of polybasic acids and aromatic compounds substituted by at least two polymerizable groups. Examples of the polyethylenic monomers are ethylene glycol di(meth)acrylate, triethylene glycol di(meth)acrylate, tetraethylene glycol di(meth)acrylate, 1,3-butylene glycol di(meth)arcylate, trimethylolpropane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tri(meth)acrylate, pentaerythritol tetra(meth)acrylate, glycerol di(meth)acrylate, 1,1,1-trishydroxymethylethane di(meth)acrylate, 1,1,1-trishydroxymethylethane tri(meth)acrylate, 1,1,1-trishydroxymethylpropane di(meth)acrylate, 1,1,-trishydroxymethylpropane tri(meth)acrylate, triallyl cyanurate, triallyl isocyanurate, triallyl trimellitate, diallyl terephthalate, diallyl phthalate or divinyl benzene. The polyethylenic monomer may be present in an amount of 0 to 80 % by weight, preferably 5 to 50 % by weight based on the total monomer amount.

The polymerization initiator (c) of the present invention includes those used for suspension polymerization. Examples of the initiators are an azo compound, such as azobisisobutyronitrile, 2,2'-azobis(4-methoxy-2,4-dimethylvaleronitrile, 2,2'-azobis(2-cyclopropyl propionate), 2,2'-azobis(2,4-dimethylvaleronitrile), 2,2'-azobis(2-methylbutyronitrile), 1,1'-azobis(cyclohexane-1-carbonitrile), 2-phenylazo-4-methoxy-2,4-dimethylvaleronitrile, azodi-t-octane, azodi-t-butane or dimethyl-2,2'-azobisisobutyrate; an alkyl perester, such as 2,4,4-trimethylpentyl peroxyphenoxyacetate, alpha-cumylperoxy neodecanoate, t-butylperoxy neodecanoate, t-butylperoxy pivalate, t-butylperoxy-2-ethylhexanoate, t-butylperoxy isobutyrate, di-t-butylperoxy hexahydroterephthalate, di-t-butylperoxy azelate, t-butylperoxy-3,5,5-trimethyl hexanoate, t-butylperoxy acetate, t-butylperoxy benzoate or di-t-butylperoxy trimethyladipate; a percarbonate compound, such as di(3-methoxybutyl)percarbonate, di(2-ethylhexyl) percarbonate, bis(4-t-butylcyclohexyl) percarbonate, diisopropyl percarbonate, di(sec-butyl) percarbonate, or t-butylisopropyl percarbonate; or a mixture thereof.

In the suspension polymerization of the present invention, an amount ratio of the pigment paste (a) / the polymerizable monomer (b) is within the range of 2/98 to 50/50, preferably 5/95 to 30/70. Amount ratios of less than 2/98 provide poor coloring power and those of more than 50/50 do not form particles. The polymerization initiator (c) is present in an amount of 0.1 to 5 % by weight based on the total monomer amount. Amounts of less than 0.1 % by weight do not provide sufficient polymerization degree and those of more than 5 % by weight increase low molecular weight products.

In the suspension polymerization, in addition to the above components, a dispersion stabilizer may be added to the mixture in order to enhance stability of the suspension. Typical examples of the dispersion stabilizers are organic stabilizers, such as polyvinyl acetate or a modifier thereof (e.g. polyvinyl alcohol), polyvinyl pyrrolidone, and a polymer dispersant having hydrophilic groups and hydrophobic groups; and inorganic stabilizers, such as calcium salts (e.g. calcium phosphate and calcium carbonate) and magnesium salts. The dispersion stabilizer may be present in the suspension in an amount of 0 to 10 % by weight. Amounts of more than 10 % by weight reduce the particle size of the obtained pigment composite particles and make it difficult to remove the stabilizer in a rinsing step.

An aqueous medium of the suspension is basically composed of water, but a water-soluble organic solvent (e.g. alcohols, and ketones) may be added. An amount of the aqueous medium is 1.5 to 19 parts by weight, preferably 2.3 to 9 parts by weight based on one part by weight of the total amount of the components (a), (b) and (c). Amounts of less than 1.5 parts by weight do not provide stable suspension and may give rise to gelation. Amounts of more than 19 parts by weight reduce the amount of the pigment composite particles of the present invention that are produced.

The pigment composite particles of the present invention may be prepared by mixing the above three components (a), (b) and (c) to which the aqueous medium is added gradually to form a uniform suspension, and then suspension polymerizing at 40 to 95 °C, preferably 60 to 85 °C for 1 to 24 hours, preferably 2 to 12 hours. The obtained particles can be isolated from the suspension by, for example, filtering, rinsing and drying. The obtained pigment resin particles generally have an average particle size of 3 to 300 µm.

Although not limited to a particular theory in ordinary suspension polymerization, monomers form particles in the suspension and are polymerized. In the present invention, it is considered that the suspended monomer particles are covered with the pigment grinding resin which carries pigment particles and then polymerized as they are. Since the pigment is present outside the obtained particles, the coloring power is as strong as the pigment itself and the pigment composite particles show high hiding power. The pigment composite particles have higher hiding power than an ordinary matting agent (e.g. silica).

In the preparation of the present invention, since it is not necessary to formulate an emulsifying agent, the obtained particles are superior in water resistance and weather resistance to those obtained by conventional processes wherein an emulsifying agent is employed. The pigment composite particles contain thereon free hydrophilic groups which are derived from the pigment grinding resin. The free hydrophilic groups, especially carboxyl groups, may be modified with a compound having other reactive groups, such as hydroxyl group containing alkyl compounds to make the surface hydrophobic.

### EXAMPLES

The present invention is illustrated by the following Examples.

### Preparation Example 1

A reaction vessel equipped with a thermometer, a stirrer, a dropping funnel and a nitrogen gas introducing tube was charged with 150 g of xylene and 200 g of butyl acetate and heated to 105 °C. A mixture of 92 g of styrene, 140 g of methyl methacrylate, 20 g of n-butyl acrylate, 116 g of 2-ethylhexyl methacrylate and 32 g of itaconic anhydride was added to the reaction vessel for 3 hours. A mixture of 6 g of t-butylperoxy-2-ethyl hexanoate and 50 g of xylene was simultaneously added thereto for 3 hours. After the completion of the addition, it was aged for 2 hours at 105 °C. To the content, 38.5 g of stearylamine was added and reacted for one hour to obtain a copolymer having a number average molecular weight of 8,000 and a solid content of 51.5 % by weight. The obtained copolymer had a hydrophilic group of 0.844 mmol/g by a titration method. The obtained polymer was neutralized with 50.8 g of dimethylethanolamine.

The obtained polymer was mixed with 168 g of carbon black (available from Mitsubishi Carbon Co., Ltd. as MA-100), 480 g of butyl acetate and 1,000 cc of steel beads and ground to obtain a pigment paste having a particle size of less than 5 µm.

### Preparation Examples 2 to 6

Pigment pastes were prepared as generally described in Preparation Example 1, with the exception that the ingredients as shown in Table 1 were employed. Amounts of the hydrophilic groups also were determined and the results are shown in Table 1.

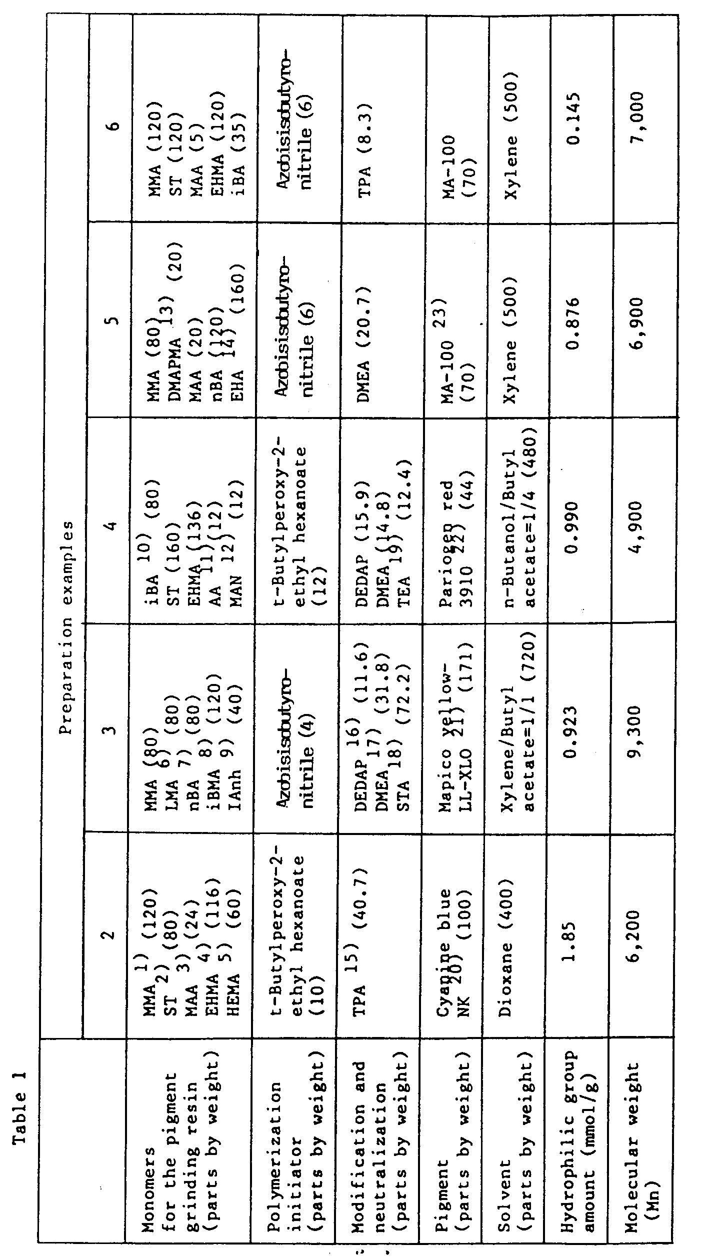

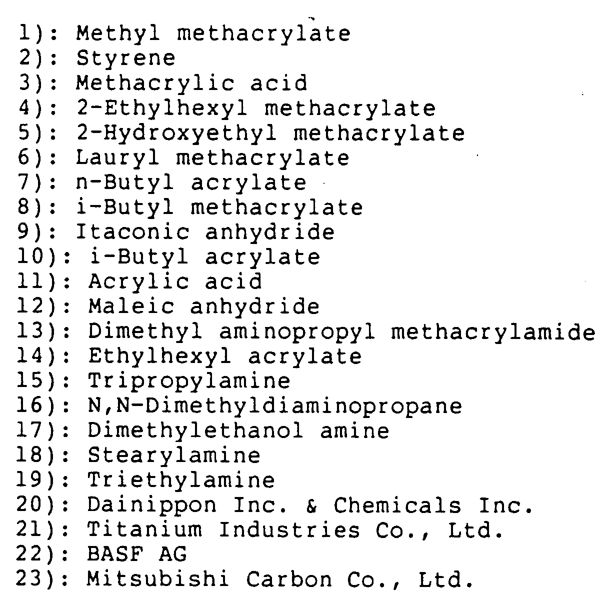

### Example 1

Ten grams of the black pigment paste of Preparation Example 1 was mixed with 30 g of styrene, 20 g of methyl methacrylate, 10 g of n-butyl acrylate and 40 g of ethylene glycol dimethacrylate, to which one gram of 2,2'-azobis(2-methylpropylnitrile) was added. Then, 900 g of deionized water was added thereto and homogenized to form a suspension.

The suspension was heated to 80 °C for 30 minutes and polymerized for 6 hours. The obtained dispersion had a nonvolatile content of 11 % by weight. It was then filtered and dried to obtain pigment composite particles having an average particle size of 40 µm.

### Examples 2 to 5

The pigment composite particles were obtained as generally described in Example 1, with the exception that ingredients and conditions as shown in Table 2 were employed. A nonvolatile content of the suspension and an average particle size of the obtained resin particles were determined and are shown in Table 2.

### Comparative Example 1

Ten grams of the black pigment paste of Preparation Example 6 was mixed with 30 g of styrene, 20 g of methyl methacrylate, 10 g of n-butyl acrylate and 40 g of ethyleneglycol dimethacrylate, to which one gram of 2,2'-azobis(2-methylpropylnitrile) was added. Then, 900 g of deionized water was added thereto and homogenized to form a suspension.

The obtained suspension was heated as described in Example 1, but resin particles were not obtained.

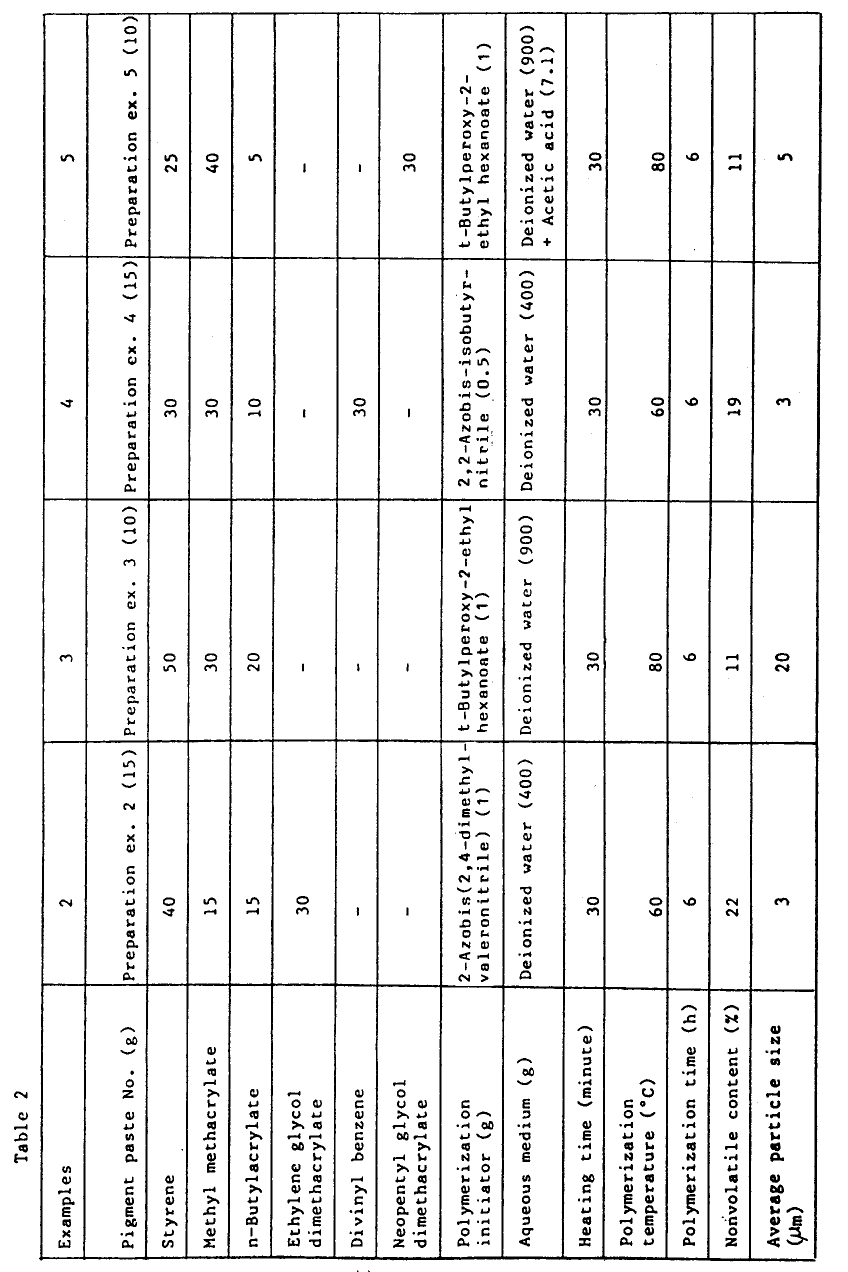

## Claims

1. Pigmented particles having an average particle size of 3 to 300 µm, as prepared by suspension-polymerising an aqueous suspension comprising:
(a) a pigment paste comprising a pigment, a resin having at least 0.2 mmol/g of a hydrophilic group, and optionally, a solvent, the amounts of the pigment and the solvent respectively being 0.01 to 2.33 and 0 to 3.8 parts by weight per part by weight of the resin;
(b) a polymerisable monomer, wherein the ratio of the pigment paste to the polymerisable monomer is within the range of 2/98 to 50/50; and
(c) a polymerisation initiator in an amount of 0.1 to 5% by weight based on the total monomer amount; wherein the suspension comprises 1.5 to 19 parts by weight of the aqueous medium per part by weight of the total amount of the components (a), (b) and (c).

2. Particles according to claim 1, wherein the resin is a vinyl polymer having carboxyl groups.

3. Particles according to claim 1 or claim 2, wherein the resin has 0.5 to 6.0 mmol/g of the hydrophilic group.

4. Particles according to any preceding claim, wherein the resin has a glass transition temperature of -20 to 100°C, a solubility parameter of 9 to 12, and a number average molecular weight (Mn) of 2,000 to 100,000.

5. Particles according to any preceding claim, wherein the monomer comprises a polyethylenic monomer.

6. Particles according to any preceding claim, wherein the suspension further comprises a dispersion stabiliser.

7. A process for preparing particles according to any preceding claim, which comprises subjecting the suspension to suspension polymerisation.

## Patentansprüche

1. Pigmentierte Teilchen, die eine durchschnittliche Teilchengröße von 3 bis 300 µm haben und durch Suspensionspolymerisation einer wäßrigen Suspension, die
(a) eine Pigmentpaste, die ein Pigment, ein Harz, das mindestens 0,2 mol/g hydrophile Gruppen aufweist, und wahlweise ein Lösungsmittel enthält, wobei die Mengen des Pigments und des Lösungsmittels 0,01 bis 2,33 bzw. 0 bis 3,8 Gew.-Teile pro Gew.-Teil Harz betragen;
(b) ein polymerisierbares Monomer, wobei das Verhältnis der Pigmentpaste zu dem polymerisierbaren Monomeren im Bereich von 2/98 bis 50/50 liegt; und
(c) einen Polymerisationsinitiator in einer Menge von 0,1 bis 5 Gew.%, bezogen auf die gesamte Monomermenge;
enthält, wobei die Suspension 1,5 bis 19 Gew.-Teile des wäßrigen Mediums pro Gewichsteil der Gesamtmenge der Komponenten (a), (b) und (c) enthält, erhältlich sind.

2. Teilchen nach Anspruch 1, in denen das Harz ein Vinylpolymer ist, das Carboxylgruppen hat.

3. Teilchen nach Anspruch 1 oder Anspruch 2, in denen das Harz 0,5 bis 6,0 mmol/g hydrophile Gruppen hat.

4. Teilchen nach einem der vorangehenden Ansprüche, in denen das Harz eine Glasübergangstemperatur von -20 bis 100°C, einen Löslichkeitsparameter von 9 bis 12 und ein Zahlenmittel des Molekulargewichts (Mn) von 2000 bis 100000 hat.

5. Teilchen nach einem der vorangehenden Ansprüche, in denen das Monomer ein Polyethylenmonomer enthält.

6. Teilchen nach einem der vorangehenden Ansprüche, in denen die Suspension außerdem einen Dispersionsstabilisator enthält.

7. Verfahren zur Herstellung von Teilchen nach einem der vorangehenden Ansprüche, das ein Unterwerfen der Suspension einer Suspensionspolymerisation umfaßt.

## Revendications

1. Particules pigmentées ayant une taille moyenne de particules de 3 à 300 µm, telles que préparées par polymérisation en suspension d'une suspension aqueuse comprenant:
(a) une pâte pigmentaire comprenant un pigment, une résine contenant un groupe hydrophile en une quantité d'au moins 0,2 mmol/g, et facultativement un solvant, les quantités du pigment et du solvant valant respectivement 0,01 à 2,33 et 0 à 3,8 parties en poids par partie en poids de la résine;
(b) un monomère polymérisable, le rapport de la pâte pigmentaire au monomère polymérisable étant situé dans l'intervalle de 2/98 à 50/50; et
(c) un amorceur de polymérisation en une quantité de 0,1 à 5% en poids, exprimée par rapport à la quantité totale de monomère; la suspension comprenant 1,5 à 19 parties en poids de milieu aqueux par partie en poids de la quantité totale des composants (a), (b) et (c).

2. Particules selon la revendication 1, dans lesquelles la résine est un polymère vinylique ayant des groupes carboxyles.

3. Particules selon la revendication 1 ou la revendication 2, dans lesquelles la résine contient le groupe hydrophile en une quantité de 0,5 à 6,0 mmol/g.

4. Particules selon l'une quelconque des revendications précédentes, dans lesquelles la résine a une température de transition vitreuse de -20 à 100°C, un paramètre de solubilité de 9 à 12 et une masse moléculaire moyenne en nombre (Mn) de 2000 à 100 000.

5. Particules selon l'une quelconque des revendications précédentes, dans lesquelles le monomère comprend un monomère polyéthylénique.

6. Particules selon l'une quelconque des revendications précédentes, dans lesquelles la suspension comprend en outre un stabilisateur de dispersion.

7. Procédé de préparation de particules selon l'une quelconque des revendications précédentes, qui comprend l'étape consistant à faire subir à la suspension une polymérisation en suspension.
